# EUROPEAN PATENT APPLICATION

(11) **EP 4 694 059 A1**
(43) Date of publication of application: **11.02.2026**
(21) Application number: 23930530.3
(22) Date of filing: 30.03.2023
(51) Int. Cl.: H04L 41/122, H04L 45/12, H04L 67/06

(54) **FILE MANAGEMENT BY VIRTUAL REGISTRY**

(71) Applicant: Rakuten Mobile, Inc., Tokyo 158-0094 (JP); Rakuten Symphony, Inc., Tokyo 158-0094 (JP)
(72) Inventor: WANG, Yidao, Tokyo 158-0094 (JP); ONO, Makoto, Tokyo 158-0094 (JP); ISHIKAWA, Takatsugu, Tokyo 158-0094 (JP)
(74) Representative: Betten & Resch
(86) International application number: PCT/JP2023/013164
(87) International publication number: WO 2024/201892

(57) **Abstract**

A file management apparatus has one or more processors that execute a process including: managing management information in which a plurality of nodes belonging to a communication network and files held by the respective plurality of nodes are associated; receiving a file request; identifying a node that holds a file corresponding to the file request by referring to the management information; and instructing at least one identified node to transmit the file corresponding to the file request to a designated destination.

## Description

### TECHNICAL FIELD

The present disclosure relates to file management using a virtual registry.

### BACKGROUND

In recent years, network functions in wireless communication systems employing such as 5G are sometimes virtualized and in this case are also referred to as Virtual Network Functions (VNFs). A VNF can be deployed in various locations in a network and enables a flexible network configuration to be realized. For example, when it is desired to reduce delays in a network service, rather than being deployed in a large-scale facility such as a Central Data Center (CDC) constructed at the center of a network, a VNF that provides a service to an end user is deployed in a medium-scale or small-scale facility such as a Regional Data Center (RDC) or Group Center (GC) that is located closer to the end user.

### CITATION LIST

### PATENT LITERATURE

Patent Document 1: JP 2022-530580 A
Patent Document 2: JP 2019-519180 A

### SUMMARY OF INVENTION

### TECHNICAL PROBLEM

For medium-scale and small-scale facilities, in particular, for a GC, there are many cases in which it is not possible to install a large-scale storage capable of storing large-capacity data, and therefore, when a VNF is to be deployed to a medium-scale or small-scale facility such as an RDC, a GC, or the like, files required for the deployment are transmitted from a large-scale facility such as a CDC to the medium-scale or small-scale facility. That is, the CDC is provided with a large-capacity registry and files stored in the registry are transmitted to the RDC and GC as necessary.

However, there is an issue that when files for a deployment of a VNF are transmitted from a large-scale facility to a medium-scale or small-scale facility, the load on a network increases. Specifically, when a large number of files are transmitted simultaneously from a CDC to a GC, for example, there are cases wherein, due to communication becoming concentrated, particularly in a network line near the CDC, the communication volume increases and communication speed in other facilities using that network line reduces.

The present disclosure was derived in the light of the foregoing and has an objective of providing file management using a virtual registry which achieves a dispersion of communication and can thus reduce a load on a network.

### SOLUTION TO PROBLEM

According to one embodiment of the present disclosure, a file management apparatus has one or more processors that execute a process including: managing management information in which a plurality of nodes belonging to a communication network and files held by the respective plurality of nodes are associated; receiving a file request; identifying a node that holds a file corresponding to the file request by referring to the management information; and instructing at least one identified node to transmit the file corresponding to the file request to a designated destination.

Further, according to another embodiment of the present disclosure, a file acquisition method includes: managing management information in which a plurality of nodes belonging to a communication network and files held by the respective plurality of nodes are associated; receiving a file request; identifying a node that holds a file corresponding to the file request by referring to the management information; and acquiring the file corresponding to the file request from at least one identified node.

### BRIEF DESCRIPTION OF DRAWINGS

Fig. 1 illustrates one example of a communication system according to embodiment 1.
Fig. 2 is a block diagram illustrating a configuration of a file management system according to embodiment 1.
Fig. 3 illustrates one example of file information.
Fig. 4 illustrates one example of virtual registry information.
Fig. 5 is a sequence diagram illustrating a file acquisition method according to embodiment 1.
Fig. 6 is a block diagram illustrating a configuration of a file management system according to embodiment 2.
Fig. 7 illustrates one example of layer information.
Fig. 8 is a sequence diagram illustrating a file acquisition method according to embodiment 2.
Fig. 9 is a block diagram illustrating an example of a hardware configuration of a CDC node.
Fig. 10 is a block diagram illustrating an example of a hardware configuration of a node.

### DESCRIPTION OF EMBODIMENTS

Below, embodiments according to the present disclosure will be described with reference to the attached drawings. The embodiments described below are exemplary and the present disclosure is not to be construed as being limited by these descriptions.

### (Embodiment 1)

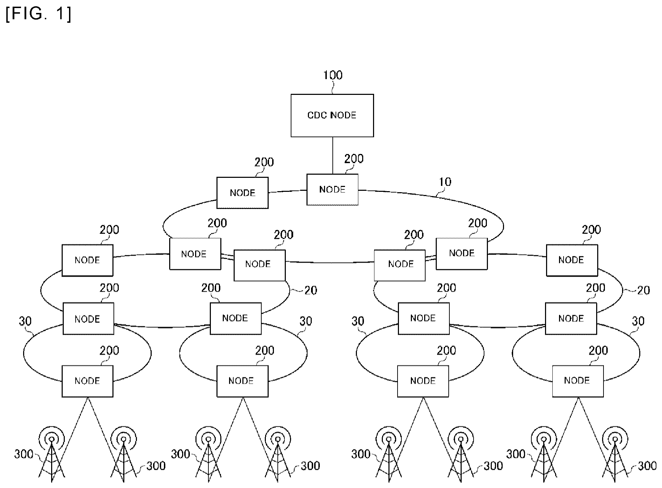

Fig. 1 illustrates one example of a communication system according to embodiment 1. The communication system shown in fig. 1 includes: a CDC node 100 placed in a CDC, which is a large-scale facility; nodes 200 placed in an RDC or GC, which are medium-scale or small-scale facilities; and bases stations 300 connected to the nodes 200.

The CDC node 100 is placed in a CDC arranged at the center of a network constituting the communication system, and stores files for deploying a VNF to a node 200 of an RDC or GC. In addition, the CDC node 100 transmits files to a node 200 of an RDC or GC as necessary. Further, the CDC node 100 stores information regarding files that each node 200 holds.

Furthermore, the CDC node 100 manages topology indicating connection relationships of the nodes 200 in the entire network. That is, the CDC node 100 stores the connection relationships of each node 200 and distances between the nodes 200.

The plurality of nodes 200 are connected in a ring shape and form an L ring 10, M rings 20, and GC rings 30 which are hierarchically connected. Specifically, the L ring 10 is an upper-level ring formed by nodes 200 near to the CDC node 100, and aggregates the M rings 20 into, for example, area units. The nodes 200 which form the L ring 10 are arranged in an RDC, for example. Further, the M rings 20 are mid-level rings formed by nodes 200 that are quite far from the CDC node 100, and aggregate the GC rings 30 into, for example, prefectural units. The nodes 200 which form the M rings 20 are arranged in an RDC or GC, for example. In addition, the GC rings 30 are lower-level rings formed by nodes 200 that are directly connected to the base stations 300. The nodes 200 which form the GC rings 30 are arranged in a GC, for example.

Note that in the present embodiment, it is assumed that the communication system is a ring-type network. However, it is possible to apply the technique of the present disclosure not only to a ring-type network but also to networks with various topologies.

When a VNF is to be newly deployed, a node 200 acquires necessary files from a virtualized registry (hereinafter referred to as "virtual registry"). That is, the node 200 constructs a virtual registry including other nodes 200 other than the own node 200 itself and the CDC node 100, and acquires a necessary file from the virtual registry. The virtual registry may include other nodes 200 that are included not only in a ring to which the own node 200 belongs but also in an upper-level ring above that ring or a connected ring that is connected via the upper-level ring. The node 200 acquires topology information from the CDC node 100 and constructs the virtual registry on the basis of the topology information.

The base station 300 is connected to the node 200 belonging to the GC ring 30, and executes wireless communication with a terminal apparatus (not shown). That is, the base station 300 wirelessly transmits data received from the node 200 to the terminal apparatus, and forwards the data wirelessly received from the terminal apparatus to the node 200.

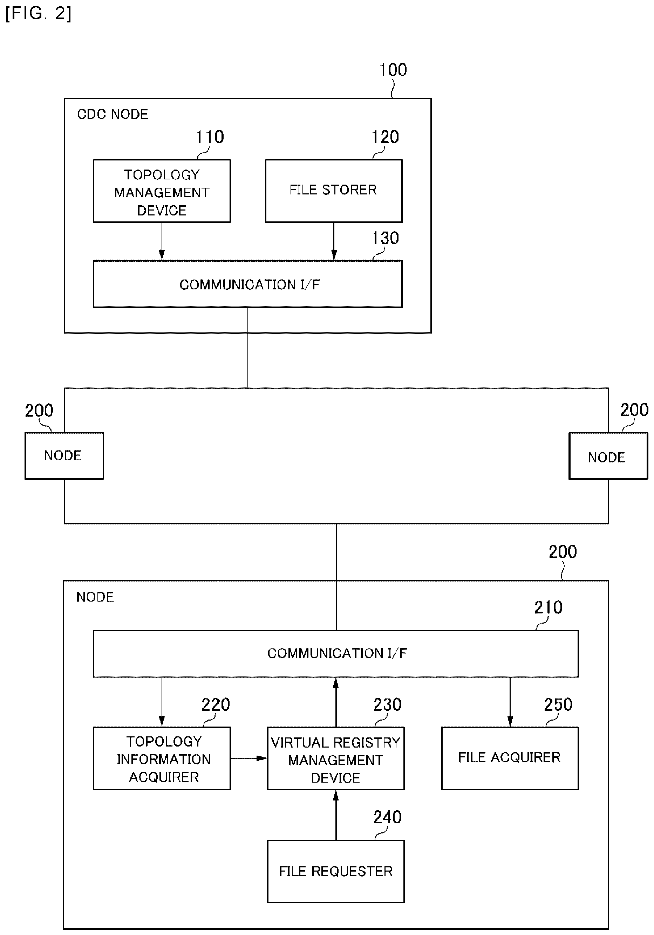

Fig. 2 is a block diagram illustrating a configuration of a file management system according to embodiment 1. The file management system has a CDC node 100 and nodes 200 connected to the CDC node 100 via one or more rings.

The CDC node 100 has a topology management device 110, a file storer 120, and a communication interface (hereinafter abbreviated to "communication I/F") 130.

The topology management device 110 manages topology of the entire network. Specifically, the topology management device 110 stores connection relationships of the nodes 200 which respectively form the L ring 10, the M rings 20, and the GC rings 30. Further, the topology management device 110 stores an index value relating to file transmission between each node 200. The index value is calculated, using a predetermined calculation formula, on the basis of a predetermined element of the network. The predetermined element may be set, as appropriate, and for example, a distance, throughput, or traffic volume in a communication route between the nodes 200, and the like, are assumed as specific examples of the element.

When, for example, a file is to be transmitted from one node 200 to another node 200, the index value is calculated so as to have a smaller value the lower is the load that is placed on a network. In that case, it is preferable for file transmission to be carried out between nodes 200 having a small index value. Further, the index value may also be calculated by taking into consideration not only the network but also the load of each node 200, a priority level assigned to each node in advance, or the like. That is, the load of each node 200, a priority level assigned to each node in advance, or the like, may be included as an element in the calculation formula for calculating the index value.

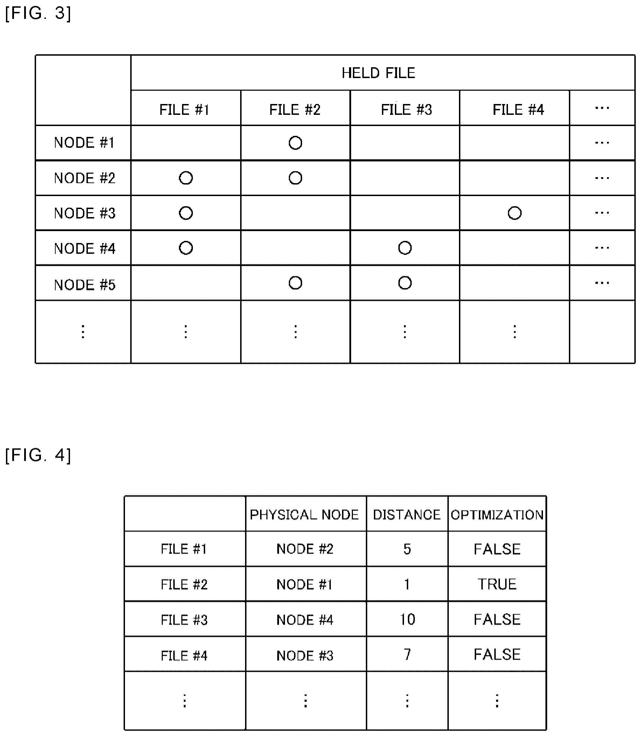

Further, the topology management device 110 stores information relating to files that each of the nodes 200 holds. That is, as shown in fig. 3, for example, the topology management device 110 stores information identifying files that each of the nodes 200 holds. In the example shown in fig. 3, circles are used to show the files that each node 200 holds. Thus, it is indicated, for example, that "node #1" holds "file #2" and that "node #2" holds "file #1" and "file #2".

In accordance with a request from a node 200, the topology management device 110 provides topology information that includes information regarding an index value in a communication route from the node 200 to other nodes 200, and information regarding files that are held by each of the other nodes 200.

The file storer 120 stores files to be used for deploying a VNF to a node 200. When requested by a node 200, the file storer 120 distributes a file to the requesting node 200.

The communication I/F 130 transmits and receives various kinds of data to and from the nodes 200. The communication I/F 130 receives requests for topology information or files from the nodes 200 and, in response to the requests, transmits topology information or files to the nodes 200.

A node 200 has a communication I/F 210, a topology information acquirer 220, a virtual registry management device 230, a file requester 240, and a file acquirer 250.

The communication I/F 210 transmits and receives various kinds of information to and from the CDC node 100 and the other nodes 200. The communication I/F 210 transmits requests for topology information or files to the CDC 100 or the nodes 200, and receives topology information or files corresponding to the requests from the CDC node 100 or the nodes 200.

In order to construct a virtual registry of an own node 200, the topology information acquirer 220 makes a request to the CDC node 100 for information regarding index values in communication routes to other nodes 200 constituting the virtual registry, and information regarding files that are held by each of the other nodes 200. In addition, the topology information acquirer 220 acquires, form the CDC node 100, topology information that includes information regarding index values in communication routes to other nodes 200, and information regarding files that are held by each of the other nodes 200.

The virtual registry management device 230 constructs and manages the virtual registry of the own node 200 and controls file acquisition from the virtual registry. Specifically, the virtual registry management device 230 uses topology information to create information in which a file and a node 200 holding the file are associated. That information is also referred to below as virtual registry information or management information. As shown in fig. 4, for example, the virtual management device 230 creates virtual registry information indicating: other nodes 200 which hold each file; index values in communication routes to the other nodes 200; and whether or not each file is held by an optimal other node 200.

In the virtual registry information shown in fig. 4, distance is used as an index value for a communication route. For example, it is shown that "file #1"is held by "node #2" which has a distance on the network from the own node 200 of "5", and that this "node #2" is not an optimal other node 200. It is further shown, for example, that "file #2" is held by "node #1" which has a distance on the network from the own node 200 of "1", and that this "node #1" is the optimal other node 200. Here, whether or not another node 200 is the optimal other node 200 depends on whether or not the distance thereto from the own node 200 is the shortest in a possible range. By creating such virtual registry information, it is possible to manage index values in communication routes from the own node 200 to the other nodes 200 constituting the virtual registry, and it becomes possible to ascertain an optimal file transmission route.

Upon receiving a request for a file from the file requester 240, the virtual registry management device 230 refers to the virtual registry information to identify, from among the nodes 200 constituting the virtual registry, nodes 200 which hold the requested file. In addition, the virtual registry management device 230 transmits a file request to the identified nodes 200 via the communication I/F 210. Note that when a node 200 that holds a file requested by the file requester 240 is not included in the virtual registry information, the virtual registry management device 230 may transmit a file request to the CDC node 100 via the communication I/F 210.

The file requester 240 requests that a file needed by the own node 200 is acquired from the virtual registry. For example, when a VNF is to be deployed to the own node 200, the file requester 240 corresponds to a VNF management device and requests a file that is to be used in the deployment of the VNF. Note that the file requester 240 notifies the virtual registry management device 230 of identification information of a requested file, and the like.

The file acquirer 250 acquires files that are transmitted from the CDC node 100 and the other nodes 200 constituting the virtual registry and are received by the communication I/F 210. For example, when a VNF is to be deployed to the own node 200, the file acquirer 250 corresponds to a VNF controller.

Note that the virtual registry management device 230 may instruct a node 200, which is a transmission destination of a file request, to transmit the file to a designated destination. At that time, the file acquirer 250 may serve as the designated destination. Further, the virtual registry management device 230 or the file requester 240, which is the requester of the file, may serve as the designated destination. When the virtual registry management device 230 or the file requester 240 is made the designated destination, the file received by the virtual registry management device 230 or the file requester 240 may be transferred to the file acquirer 250. Further, when the own node 200 constitutes a virtual registry of another node 200, in accordance with a request from the other node 200, the virtual registry management device 230 may instruct a file to be transmitted to the other node 200, or the own node 200 may acquire the file and forward the file to the other node 200.

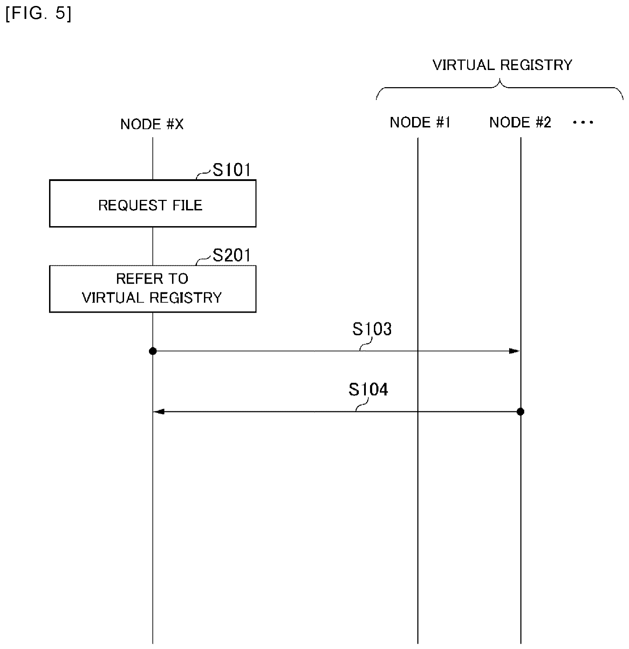

Next, a file acquisition method in a file management system configured in the manner described above shall be explained with reference to the sequence diagram shown in fig. 5. Below, there is an explanation of a case in which, in order to perform a deployment of a VNF, one node 200 acquires a file from a virtual registry configured so as to include a plurality of other nodes 200. Further, the node 200 that acquires the file is referred to as "node #x", and the virtual registry includes "node #1" and "node #2" which are other nodes 200.

When a VNF is to be newly deployed in node #x, a file necessary for the deployment of the VNF is requested by the file requester 240 (step S101). The file request from the file requester 240 is received by the virtual registry management device 230, and virtual registry information is referred to (step S102). Specifically, by referring to the virtual registry information, a node 200 that, among the nodes 200 constituting the virtual registry, holds the requested file is identified. Here, the explanation continues with an assumption that node #2 holds the requested file.

Note that when node #2 that holds the file is identified by referring to the virtual registry information, if node #2 is not the optimal node 200, a command to achieve optimization of a node 200 holding the file may be transmitted from the virtual registry management device 230. That is, a command may be transmitted to instruct the identified node #2 to copy the file to another node 200 for which an index value in a communication route from node #x is the smallest within a possible range. By doing the foregoing, topology information managed by the CDC node 100 is updated, and together therewith, the virtual registry information managed by node #x is updated. As a result thereof, it becomes possible to acquire the file from the other node 200 which has a communication route with a small index value, and thus, it is possible to realize efficient use of a network in which a load on a network or node 200 is taken into consideration.

When node #2 is identified by the virtual registry management device 230, a file request is transmitted from the communication I/F 210 to node #2 (step S103). Node #2, which receives the file request, transmits a file to node #x in accordance with the request (step S104). The file received by node #x is acquired by the file acquirer 250, and the file is used to execute deployment of the VNF.

In this manner, since the file is acquired from node #2 constituting the virtual registry, node #x is not required to acquire the file from the CDC node 100, and thus, it is possible to avoid concentration of communication to a network line near the CDC node 100, for example, and to use the network efficiently. In other words, it is possible to achieve a dispersion of communication and to reduce a load on the network.

As described above, according to the present embodiment, nodes of an RDC or GC each construct, on the basis of the topology of a network, a virtual registry including nodes other than a CDC node, and acquire files from the virtual registry. Due thereto, it is not necessary for all nodes to acquire files from the CDC node, and thus, communication for receiving and transmitting files does not concentrate at a specific location in the network line. As a result thereof, it is possible to achieve a dispersion of communication and to reduce a load on the network.

### (Embodiment 2)

The file that the node 200 acquires in embodiment 1 above is configured so as to include a plurality of layers. Here, in embodiment 2, a case is described in which the node 200 acquires, from the virtual registry, a layer constituting a file.

Since the configuration of the communication system according to embodiment 2 is the same as that of embodiment 1 (fig. 1), an explanation thereof will be omitted.

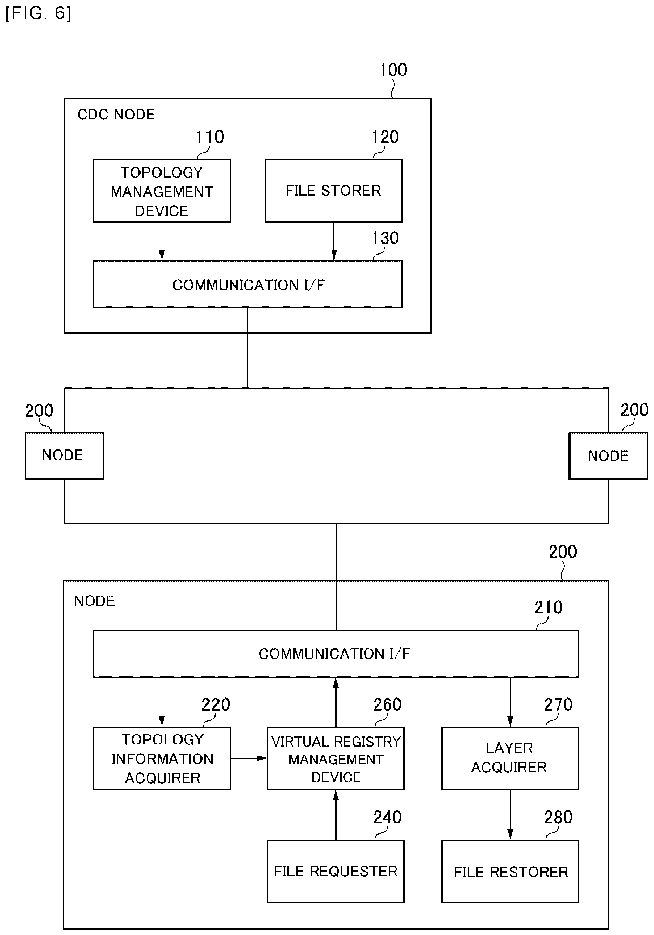

Fig. 6 is a block diagram illustrating a configuration of a file management system according to embodiment 2. In fig. 6, the same reference signs are used for the same elements as those in fig. 2, and an explanation thereof shall be omitted. In the file management system shown in fig. 6, instead of the virtual registry management device 230 and the file acquirer 250, the node 200 has a virtual registry management device 260, a layer acquirer 270, and a file restorer 280.

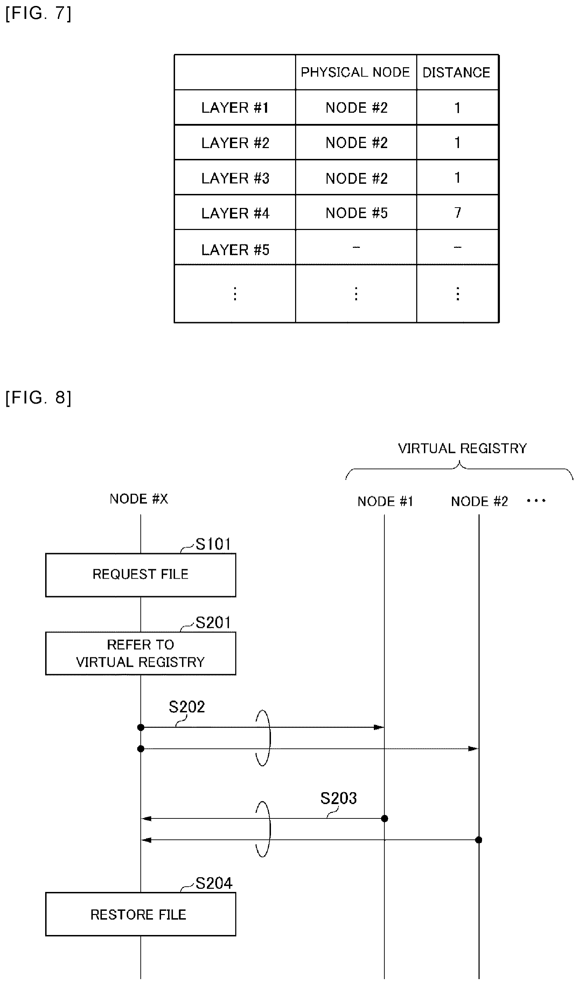

The virtual registry management device 260 constructs and manages a virtual registry of the own node 200 and controls layer acquisition from the virtual registry. Specifically, the virtual registry management device 260 uses topology information to create virtual registry information in which a layer constituting a file and a node 200 holding the layer are associated. That is, as shown in fig. 7, for example, the virtual registry management device 260 creates virtual registry information indicating: other nodes 200 which hold each layer; and index values in communication routes to the other nodes 200.

In the virtual registry information shown in fig. 7, distance is used as an index value in for communication routes. It is indicated, for example, that "layer #1" is held by "node #2" which has a distance on the network from the own node 200 of "1". It is further shown, for example, that "layer #4" is held by "node #5" which has a distance on the network from the own node 200 of "7". Furthermore, it is indicated, for example, that there are no other nodes 200 that hold "layer #5".

Upon receiving a request for a file from the file requester 240, the virtual registry management device 260 refers to virtual registry information to identify the nodes 200 holding a layer constituting the requested file. In addition, the virtual registry management device 260 transmits a layer request to the identified nodes 200 via the communication I/F 210. Note that when a node 200 that holds a desired layer is not included in the virtual registry information, the virtual registry management device 260 may transmit a layer request to the CDC node 100 via the communication I/F 210.

The layer acquirer 270 acquires layers that are transmitted from the CDC node 100 and the other nodes 200 constituting the virtual registry and received by the communication I/F 210. The layer acquirer 270 may acquire a plurality of layers constituting one file from different other nodes 200 and the CDC node 100.

The file restorer 280 uses the plurality of layers acquired by the layer acquirer 270 to restore the file. The file restored by the file restorer 280 is held by the own node 200 and is used in the deployment of the VNF. Further, when the own node 200 constitutes a virtual registry of another node 200, a layer constituting a file held by the own node 200 may be transmitted to the other node 200 in accordance with a request from the other node 200.

Next, a file acquisition method in a file management system configured in the manner described above shall be explained with reference to the sequence diagram shown in fig. 8. In fig. 8, the same reference signs are given to the same elements as those in fig. 5. Below, there is an explanation of a case in which one node 200 acquires a layer constituting a file from a virtual registry configured so as to include a plurality of other nodes 200. Further, the node 200 that acquires the layer is referred to as "node #x", and the virtual registry includes "node #1" and "node #2" which are other nodes 200.

When a VNF is to be newly deployed in node #x, a file necessary for the deployment of the VNF is requested by the file requester 240 (step S101). The file request from the file requester 240 is received by the virtual registry management device 260, and virtual registry information is referred to (step S201). Specifically, by referring to the virtual registry information, a node 200 that, among the nodes 200 constituting the virtual registry, holds a layer constituting the requested file is identified. Here, the explanation continues with an assumption that node #1 and node #2 hold a layer constituting the requested file.

When node #1 and node #2 are identified by the virtual registry management device 260, layer requests are transmitted from the communication I/F to node #1 and node #2 (step S202). Node #1 and node #2, which receive the layer requests, transmit layers to node #x in accordance with the requests (step S203). The layers received by node #x are acquired by the layer acquirer 270, and the file is restored from the acquired layers by the file restorer 280 (step S204). In addition, the restored file is used to execute the deployment of the VNF.

In this manner, since layers constituting the file are acquired from node #1 and node #2 constituting the virtual registry, node #x is not required to acquire the layers from the CDC node 100, and thus, it is possible to avoid concentration of communication to a network line near the CDC node 100. In other words, it is possible to achieve a dispersion of communication and to reduce the load on the network. Further, since node #x acquires the requested file in layer units from the virtual registry, it is possible to acquire layers from another node 200 that holds a file in which a layer in common with the requested file is included, and to restore the file. That is, it becomes possible to also acquire, from another node 200 that does not hold the same file as the file that the node #x requests, a layer that is necessary for restoring the file.

As described above, according to the present embodiment, nodes of an RDC or GC each construct, on the basis of the topology of a network, a virtual registry including nodes other than a CDC node, and acquire, from the virtual registry, layers constituting a file. Due thereto, it is not necessary for all nodes to acquire layers from the CDC node, and thus, communication for receiving and transmitting layers does not concentrate at a specific location in the network line. As a result thereof, it is possible to achieve a dispersion of communication and to reduce a load on the network. Further, since layers constituting a file are acquired in layer units, it is possible to efficiently acquire necessary layers from a plurality of nodes constituting a virtual registry.

In each of the embodiments above, the explanation assumed that a node 200 has a topology information acquirer 220 and a virtual registry management device 230, 260. However, it is not always necessary for the node 200 to be provided with the topology information acquirer 220 and the virtual registry management device 230, 260. That is, the topology information acquirer 220 and the virtual registry management device 230, 260 may be provided to a file management apparatus that is a separate body from a node 200 placed in an RDC or GC, and the node 200 may be configured so as to request a file from the file management apparatus. In that case, the file management apparatus acquires a file from the virtual registry and forwards the file to the node 200 in accordance with the request from the node 200.

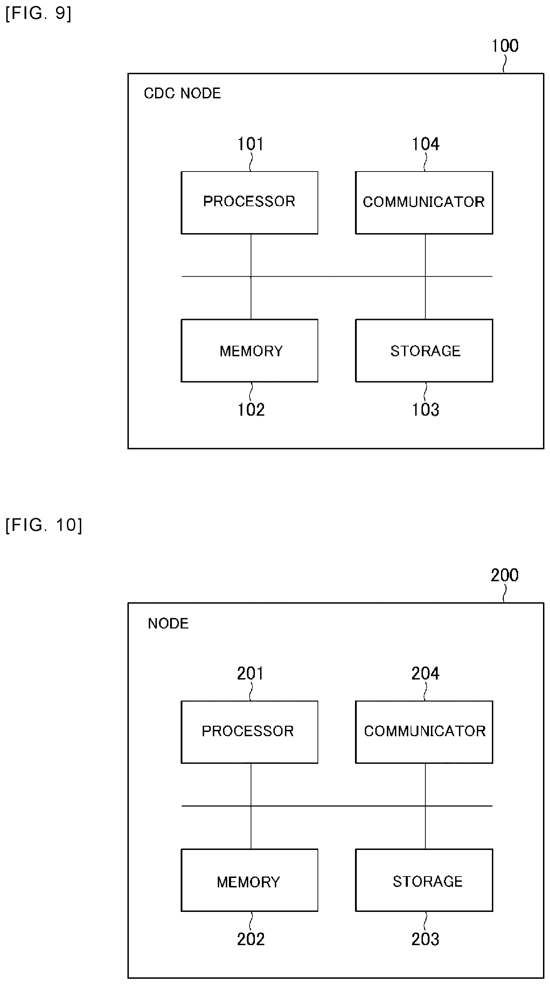

The CDC node 100 according to each of the embodiments described above may be configured by using a processor and a memory. Fig. 9 is a block diagram illustrating one example of a hardware configuration of the CDC node 100 according to the embodiments. As shown in fig. 9, the CDC node 100 has a processor 101, a memory 102, a storage 103, and a communicator 104.

The processor 101 includes, for example, a Central Processing Unit (CPU), a Field Programmable Gate Array (FPGA), a Digital Signal Processor (DSP), or the like, and performs integrated control of the entire CDC node 100 as well as executing various kinds of information processing.

The memory 102 includes, for example, a Random Access Memory (RAM), a Read Only Memory (ROM), or the like, and stores information used in information processing executed by the processor 101.

The storage 103 includes, for example, a Hard Disk Drive (HDD), a Solid State Drive (SSD), or the like, and stores various kinds of data.

The communicator 104 includes an interface for executing wired communication or wireless communication, and communicates with the nodes 200.

Note that the CDC node 100 may have another configuration not shown, such as, for example, a display, an operation switch, or the like.

Similarly, the node 200 according to each of the embodiments above may be configured by using a processor and a memory. Fig. 10 is a block diagram illustrating one example of a hardware configuration of the node 200 according to the embodiments. As shown in fig. 10, the node 200 has a processor 201, a memory 202, a storage 203, and a communicator 204.

The processor 201 includes, for example, a CPU, an FPGA, a DSP, or the like, and performs integrated control of the entire node 200 as well as executing various kinds of information processing_{∘}

The memory 202 includes, for example, a RAM, a ROM, or the like, and stores information used in information processing executed by the processor 201.

The storage 203 includes, for example, an HDD, an SSD, or the like, and stores various kinds of data.

The communicator 204 includes an interface for executing wired communication or wireless communication, and communicates with the CDC node 100 and the nodes 200.

Note that the node 200 may have another configuration not shown, such as, for example, a display, an operation switch, or the like.

The processing by the CDC node 100 and the nodes 200 described in the embodiments above may each be written as a program that is executable by a computer. In that case, the programs can be stored on a computer-readable non-transitory recording medium and installed onto a computer. Examples of such a recording medium include portable recording media such as CD-ROMs, DVD discs, USB memories, and the like, and semiconductor memories such as flash memories, and the like.

Note that the present disclosure is not limited to the above embodiments and includes various modified examples in which constituent elements have been added, removed, or replaced with respect to the configurations described above.

Further, the term "connect" used herein means a logical connection for communication. For example, "B connected to A" means that A and B are logically connected such that communication therebetween is possible. Accordingly, there is no need for A and B to be directly connected in a physical manner by using physical cables, or the like, and A and B may be connected via multiple devices or by wireless communication.

The present disclosure described above includes the following [1] to [9].
[1] A file management apparatus having one or more processors that execute a process including:
   managing management information in which a plurality of nodes belonging to a communication network and files held by the respective plurality of nodes are associated;
   receiving a file request;
   identifying a node that holds a file corresponding to the file request by referring to the management information; and
   instructing at least one identified node to transmit the file corresponding to the file request to a designated destination.
[2] The file management apparatus described in [1] above,
   wherein the process further includes
   determining, on the basis of an index value relating to transmitting a file corresponding the file request, a node, from among the identified nodes, for transmitting the file corresponding to the file request to the designated destination.
[3] The file management apparatus described in [2],
   wherein the index value is calculated on the basis of a distance, a throughput, or a traffic volume of a communication route via which the file corresponding to the file request is to be transmitted.
[4] The file management apparatus described in [1] above,
   wherein the managing includes
   creating the management information on the basis of information relating to connection relationships of the plurality of nodes and information relating to files that the plurality of nodes hold.
[5] The file management apparatus described in [4] above,
   wherein the managing includes
   acquiring, from a node arranged at the center of the communication network, the information relating to connection relationships of the plurality of nodes and the information relating to files that the plurality of nodes hold.
[6] The file management apparatus described in [1] above, wherein:
   the managing includes
   managing management information in which a plurality of layers constituting a file and nodes holding the layers are associated;
   the identifying includes
   identifying a node that holds a layer constituting a predetermined file by referring to the management information; and
   the instructing includes
   instructing at least one identified node to transmit a layer constituting the file corresponding to the file request.
[7] The file management apparatus described in [6] above,
   wherein the process further includes
   restoring the file corresponding to the file request using the layer transmitted in response to instruction at the instructing.
[8] A virtual registry system having one or more processors,
   wherein the one or more processors execute a process including:
   managing management information in which a plurality of nodes belonging to a communication network and files held by the respective plurality of nodes are associated;
   receiving a file request;
   identifying a node that holds a file corresponding to the file request by referring to the management information; and
   transmitting the file corresponding to the file request from at least one identified node to a request source of the file request.
[9] A file acquisition method including:
   managing management information in which a plurality of nodes belonging to a communication network and files held by the respective plurality of nodes are associated;
   receiving a file request;
   identifying a node that holds a file corresponding to the file request by referring to the management information; and
   acquiring the file corresponding to the file request from at least one identified node.

### REFERENCE SIGNS LIST

- 100: CDC node
- 101, 201: Processor
- 102, 202: Memory
- 103, 203: Storage
- 104, 204: Communicator
- 110: Topology management device
- 120: File storer
- 130, 210: Communication I/F
- 200: Node
- 220: Topology information acquirer
- 230, 260: Virtual registry management device
- 240: File requester
- 250: File acquirer
- 270: Layer acquirer
- 280: File restorer
- 300: Base station

## Claims

1. A file management apparatus having one or more processors that execute a process comprising:
managing management information in which a plurality of nodes belonging to a communication network and files held by the respective plurality of nodes are associated;
receiving a file request;
identifying a node that holds a file corresponding to the file request by referring to the management information; and
instructing at least one identified node to transmit the file corresponding to the file request to a designated destination.

2. The file management apparatus according to claim 1,
wherein the process further comprises
determining, on the basis of an index value relating to transmitting a file corresponding the file request, a node, from among the identified nodes, for transmitting the file corresponding to the file request to the designated destination.

3. The file management apparatus according to claim 2,
wherein the index value is calculated on the basis of a distance, a throughput, or a traffic volume of a communication route via which the file corresponding to the file request is to be transmitted.

4. The file management apparatus according to claim 1,
wherein the managing comprises
creating the management information on the basis of information relating to connection relationships of the plurality of nodes and information relating to files that the plurality of nodes hold.

5. The file management apparatus according to claim 4,
wherein the managing comprises
acquiring, from a node arranged at the center of the communication network, the information relating to connection relationships of the plurality of nodes and the information relating to files that the plurality of nodes hold.

6. The file management apparatus according to claim 1, wherein:
the managing comprises
managing management information in which a plurality of layers constituting a file and nodes holding the layers are associated;
the identifying comprises
identifying a node that holds a layer constituting a predetermined file by referring to the management information; and
the instructing comprises
instructing at least one identified node to transmit a layer constituting the file corresponding to the file request.

7. The file management apparatus according to claim 6,
wherein the process further comprises
restoring the file corresponding to the file request using the layer transmitted in response to instruction at the instructing.

8. A virtual registry system having one or more processors,
wherein the one or more processors execute a process comprising:
managing management information in which a plurality of nodes belonging to a communication network and files held by the respective plurality of nodes are associated;
receiving a file request;
identifying a node that holds a file corresponding to the file request by referring to the management information; and
transmitting the file corresponding to the file request from at least one identified node to a request source of the file request.

9. A file acquisition method comprising:
managing management information in which a plurality of nodes belonging to a communication network and files held by the respective plurality of nodes are associated;
receiving a file request;
identifying a node that holds a file corresponding to the file request by referring to the management information; and
acquiring the file corresponding to the file request from at least one identified node.
